# FASCICULE DE BREVET EUROPEEN

(11) **EP 0 578 569 B1**
(45) Date de publication et mention de la délivrance du brevet: **27.09.1995**
(21) Numéro de dépôt: 93401762.5
(22) Date de dépôt: 06.07.1993
(51) Int. Cl.: B25B 13/48, B60T 17/22

(54) **Outil de vissage sous effort axial**
Werkzeug zum Schrauben unter axialem Kraftaufwand
Tool for screwing under axial strain

(30) Priorité: 07.07.1992 FR 9208389
(43) Date de publication de la demande: 12.01.1994
(73) Titulaire: FACOM, Société dite:, 91423 Morangis Cédex (FR)
(72) Inventeur: Gencourt, Pierre Alexandre, F-94550 Chevilly Larue (FR); Lecardonnel Yves, F-91310 Montlhery (FR)
(74) Mandataire: Jacobson, Claude

(56) Documents cités:
- DE-U- 9 110 639
- FR-A- 2 059 834
- US-A- 4 169 395
- US-A- 4 845 823
- US-A- 4 974 478
- US-A- 5 003 681

## Description

La présente invention est relative à un outil de vissage sous effort axial d'un organe situé en regard d'une surface de réaction, du type comprenant une pince écarteuse à deux becs. Cet outil peut notamment être destiné à revisser le piston et l'écrou d'un frein à disque à rattrapage de jeu par dévissage d'un écrou intérieur à ce piston.

Certains freins à disque, tels que les freins Série V de la Société BENDIX, comprennent un étrier coulissant dans une des deux branches duquel est monté un piston de serrage du frein. La face intérieure de l'autre branche de l'étrier et la face en regard du piston portent des plaquettes de frein amovibles. Le piston est solidaire dans un seul sens de rotation d'un écrou vissé sur une vis normalement fixe par rapport à l'étrier, et un mécanisme intérieur au piston assure l'avance progressive du piston par dévissage de l'écrou au fur et à mesure de l'usure des plaquettes. Ces dernières sont guidées en translation par l'étrier et obligent le piston à se déplacer également en translation.

Lorsqu'il faut changer des plaquettes usées, il est nécessaire de revisser le piston et l'écrou jusqu'à leur position initiale, et ceci n'est possible qu'en exerçant simultanément sur le piston un effort axial important et un couple de vissage.

Les outils actuels capables d'effectuer ces actions ne sont pas entièrement satisfaisants :
- certains outils comprennent une vis au pas du piston qui porte une rondelle-écrou d'appui et, à son extrémité, un flasque d'entraînement du piston. Ces outils sont peu commodes à mettre en place et à retirer. De plus, ils exigent de la part de l'opérateur un effort musculaire important pendant le vissage, et ils ne sont utilisables qu'avec les étriers comportant un évidement semi-circulaire en regard du piston, comme c'est le cas dans les freins Bendix Série V précités;
- d'autres outils, du type mentionné plus haut, sont au contraire faciles à mettre en place et à retirer, et requièrent un effort musculaire réduit, mais, du fait que leurs becs sont conformés en barres à section rectangulaire qui s'appuient directement sur le piston et sur l'étrier, ils ne conviennent pas au cas des étriers évidés. De plus, ils doivent être retirés et remis en place un grand nombre de fois pendant le vissage du piston.

L'invention a pour but de fournir un outil facile à mettre en place et à retirer et permettant de réaliser de façon commode un vissage sous effort axial élevé sans nécessiter de la part de l'opérateur un effort musculaire important.

A cet effet, l'invention a pour objet un outil du type précité, caractérisé en ce que l'un des deux becs porte sur sa face extérieure un flasque d'entraînement muni de moyens de positionnement sur ledit organe et monté rotatif sur le bec par l'intermédiaire d'une roue libre.

Suivant d'autres caractéristiques de l'invention :
- la pince comporte un mécanisme articulé assurant des déplacements des deux becs parallèlement à eux-mêmes;
- le flasque et/ou une surface d'appui prévue à l'extrémité du second bec sont montés sur les becs correspondants par l'intermédiaire d'une articulation;
- le second bec porte un patin élargi d'appui sur la surface de réaction;
- le patin est monté rotatif sur le second bec;
- le patin est monté sur la face intérieure du second bec;
- le patin coiffe le second bec et s'applique sur la face extérieure de celui-ci;
- le patin dépasse du second bec vers le premier bec et présente un évidement de réception du premier bec en position resserrée de la pince;
- le second bec comporte des moyens de limitation du débattement angulaire du patin qui assurent le maintien de l'évidement en regard du premier bec.

Lorsque l'outil est destiné à revisser le piston et l'écrou d'un frein à disque à rattrapage de jeu par dévissage d'un écrou intérieur à ce piston, de façon avantageuse, le patin est une rondelle d'appui munie d'une portée de centrage dans un évidement de l'étrier du frein coaxial au piston.

Suivant encore d'autres caractéristiques :
- le patin présente un profil extérieur, notamment à peu près rectangulaire, adapté pour buter contre la surface intérieure de l'étrier du frein lors de l'actionnement en va-et-vient de la pince;
- les becs sont inclinés dans le même sens par rapport au plan général de la pince.
- la roue libre est munie d'un dispositif d'inversion.

Un exemple de réalisation de l'invention va maintenant être décrit en regard des dessins annexés, sur lesquels :
- la Figure 1 est une vue en perspective éclatée d'un outil conforme à l'invention, en position semi-ouverte;
- la Figure 2 est une vue de face de cet outil, dans la même position;
- la Figure 3 est une vue de l'une des branches, prise suivant la flèche III de la Figure 2;
- la Figure 4 est une vue en coupe de l'outil en position resserrée, la coupe passant par le plan de symétrie de l'outil, suivant une ligne correspondant à la ligne IV-IV de la Figure 3;
- la Figure 5 est une vue analogue à la Figure 4, correspondant à une variante:
- la Figure 6 représente en perspective une pièce de la Figure 5;
- la Figure 7 illustre en perspective l'utilisation d'un outil conforme à l'invention;
- la Figure 8 est une vue en bout du piston du frein;
- la Figure 9 est une vue de face, avec coupe partielle, d'un autre outil conforme à l'invention; et
- les Figures 10 et 11 sont des vues partielles, respectivement suivant les flèches X et XI de la Figure 9.

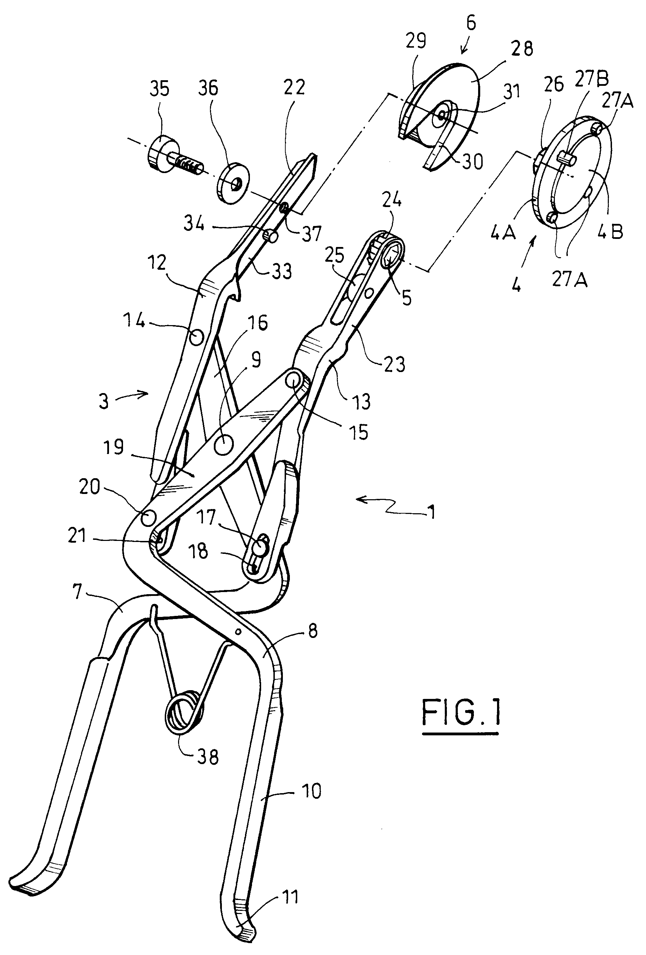

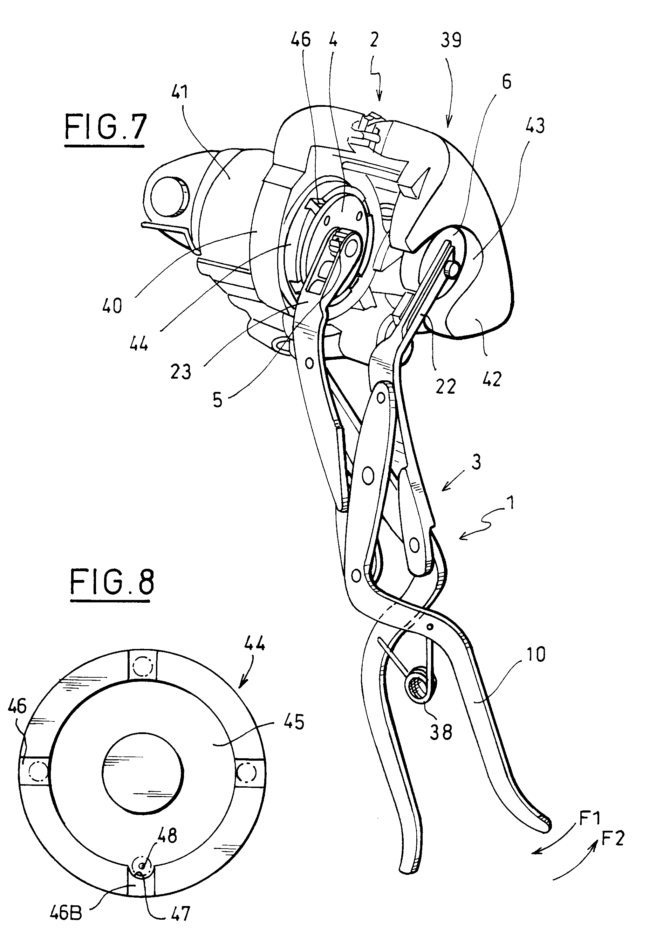

L'outil de vissage 1 représenté aux Figures 1 à 4 est destiné à être utilisé avec un frein à disque 2, visible sur les Figures 7 et 8, qui sera partiellement décrit plus loin. L'outil comprend essentiellement une pince écarteuse 3, un flasque d'entraînement 4 monté sur cette pince par l'intermédiaire d'une roue libre 5, et une rondelle d'appui 6 également montée sur la pince.

La pince 3 a pour l'essentiel la structure classique de la pince commercialisée par la Demanderesse sous la dénomination "D60A". Elle comporte deux branches 7, 8 symétriques l'une de l'autre, en forme générale de S, articulées l'une sur l'autre, au moyen d'un axe 9, près de leurs extrémités distales. Leurs parties proximales forment des poignées 10 à peu près rectilignes à extrémités 11 légèrement recourbées vers l'extérieur pour assurer la prise stable de l'outil.

La pince 3 comprend également deux biellettes 12, 13 dont chacune est articulée à peu près à mi-longueur, par un axe respectif 14, 15, sur l'extrémité d'une branche respective 7, 8.

La partie distale 16 de la branche 7 est rectiligne. Elle comporte, outre l'axe 14 à son extrémité distale et l'axe 9 à mi-longueur, un troisième axe 17, à son extrémité proximale. Cet axe 17 coulisse dans une boutonnière longitudinale 18 ménagée à l'extrémité proximale de la biellette 13. De même, la partie distale 19 de la branche 8, rectiligne, comporte, outre l'axe 15 à son extrémité distale et l'axe 9 à mi-longueur, un troisième axe 20 à son extrémité proximale, lequel axe coulisse dans une boutonnière longitudinale 21 ménagée à l'extrémité proximale de la biellette 12.

Grâce à ce mécanisme, les biellettes 12 et 13 se déplacent toujours parallèlement à elles-mêmes. Leurs parties distales forment des becs 22, 23 rectilignes et parallèles entre eux, qui sont inclinés d'environ 45° par rapport au plan général de la pince, comme on le voit à la Figure 7.

La roue libre 5 est montée dans l'extrémité distale du bec 23. Elle comprend une roue de cliquet 24, ayant intérieurement un profil femelle carré, hexagonal, etc, qui tourillonne dans ce bec, et un cliquet 25 qui n'autorise la rotation de la roue 24 que dans un seul sens prédéterminé.

Le flasque 4 est constitué d'un disque 4A sur la face intérieure duquel fait saillie un embout mâle 26 conjugué du profil intérieur de la roue 24. Sur la périphérie de la face extérieure de ce disque font saillie axialement quatre ergots cylindriques espacés à 90° les uns des autres. Trois ergots 27A ont une hauteur faible et commune et se trouvent sur un même cercle, et le quatrième 27B a une hauteur nettement supérieure, est plus proche de l'axe et dépasse sur la face opposée du disque. Sur la même face du disque fait également saillie une portée de centrage cylindrique 4B tangente aux trois petits ergots 27A.

Le flasque 4 se monte de façon amovible sur le côté extérieur du bec 23 par insertion de l'embout 26 dans la roue 24. Bien entendu, en variante, l'embout mâle pourrait être solidaire de la roue 24 et pénétrer dans un évidement conjugué ménagé dans le flasque 4.

La rondelle d'appui 6 est constituée d'un disque 28 portant, en saillie sur sa face extérieure, une portée cylindrique coaxiale 29 de plus petit diamètre. Le disque comporte une large échancrure 30 définie par deux rayons qui font entre eux un angle d'environ 60° et qui sont raccordés tangentiellement l'un à l'autre par un arc de cercle concentrique au disque. La portée 29 présente un alésage étagé dans lequel se loge un écrou circulaire 31, et sa face extérieure présente une rainure arquée 32 centrée sur l'axe du disque 28 et symétrique par rapport à la bissectrice de l'échancrure 30.

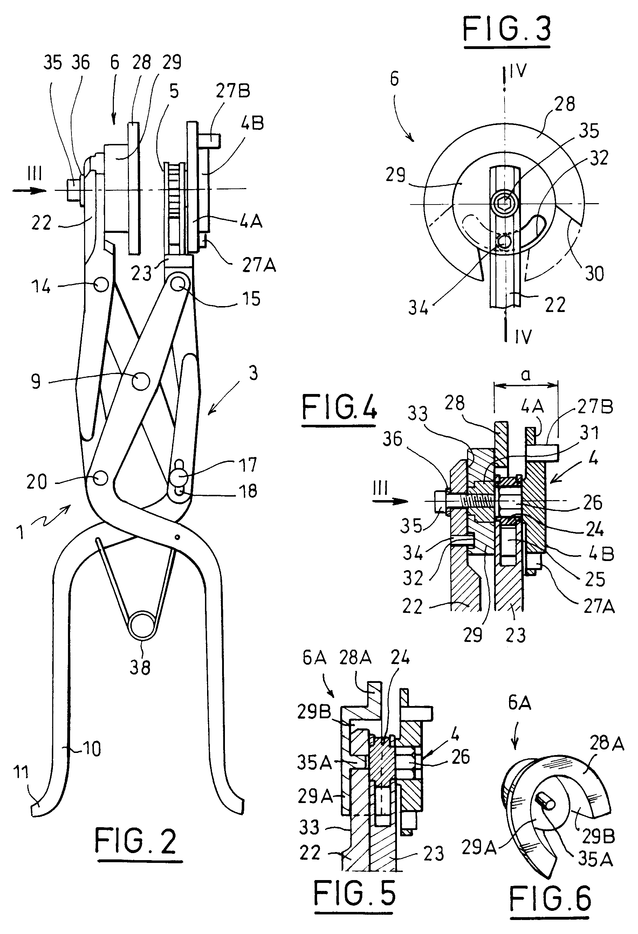

Comme on le voit sur la figure 4, la face intérieure du bec 22 présente un dégagement 33 contre lequel se plaque la portée 29, un pion 34 en saillie sur la face intérieure du bec venant alors s'insérer dans la rainure 32. Une vis de retenue 35 à rondelle 36 traverse un orifice 37 du bec 22 et vient se visser dans l'écrou 31. Ainsi, la rondelle 6 est librement rotative sur le bec 22, mais l'amplitude de son débattement angulaire est limitée par la venue du pion 34 en butée aux extrémités de la rainure 32, comme illustré sur la figure 3.

L'outil est complété par un ressort 38 qui tend à maintenir la pince fermée. Dans cette position (figure 4), l'extrémité du bec 23 est reçue dans l'échancrure 30 de la rondelle 6, ce qui réduit l'épaisseur a entre la face extérieure du disque 28 et l'extrémité de l'ergot 27B le plus haut. La limitation du débattement angulaire de la rondelle 6, décrite ci-dessus, garantit que l'échancrure 30 se trouve toujours en regard du bec 23 pour en permettre sa réception lorsque la pince se ferme.

La variante illustrée aux Figures 5 et 6 ne diffère du mode de réalisation des Figures 3 et 4 que par la structure et le montage du flasque 4, de la roue libre 5 et de la rondelle d'appui 6, ainsi que par la configuration du bec 22.

En ce qui concerne les éléments 4 et 5, la pièce mâle 26 est portée par la roue 24 et pénètre dans un évidement conjugué, par exemple hexagonal, du flasque 4. La pièce interchangeable 4 est ainsi simplifiée.

Par ailleurs, la rondelle 6A est constituée par une cuvette ayant un fond plat 29A, une paroi cylindrique 29B et, à l'extrémité de celle-ci opposée au fond 29A, une collerette d'appui extérieure 28A plane et parallèle à ce fond. La paroi 29B et la collerette 28A sont supprimées sur un secteur angulaire analogue à celui de l'échancrure 30 de la Figure 3. Un tourillon 35A fait saillie sur la face intérieure du fond 29A.

Le bec 22 comporte, dans cette variante, le dégagement 33 dans sa face extérieure. La rondelle 6A coiffe le bec 22, avec le tourillon 35A introduit dans l'orifice de ce bras et le fond 29A appliqué contre le fond du dégagement 33. Si nécessaire, le frottement entre le tourillon et l'orifice qui le reçoit peut être accru, par exemple au moyen d'une bille à ressort logée dans le tourillon.

Cet agencement présente plusieurs avantages par rapport à celui des Figures 3 et 4 : les organes 31, 35, 36 sont remplacés par un simple tourillon 35A, et l'interchangeabilité de la rondelle 6A est immédiate, comme celle du flasque 4; la paroi latérale 29B assure elle-même la fonction de limitation du débattement angulaire de la rondelle, par coopération avec les faces latérales du bec 22; et le bec 23 peut, en position resserrée de la pince, venir au contact du bec 22, ce qui réduit encore l'épaisseur a mentionnée plus haut.

Le frein à disque illustré sur la figure 7 est du type Bendix Série V. Il comprend un étrier 39, destiné à être monté coulissant sur un véhicule, dont une branche 40 porte extérieurement un corps de vérin 41 venu de matière. Pour permettre l'alésage de ce corps, l'autre branche 42 présente un évidement semi-circulaire 43 coaxial au corps du vérin. Dans le corps 41 coulisse à joint étanche un piston 44 de serrage du frein qui, à l'intérieur du corps de vérin, est solidaire dans un seul sens de rotation d'un écrou vissé sur une vis normalement fixe. La face extérieure (par rapport au corps 41) de ce piston (Figure 8) présente un évidement coaxial annulaire 45 et quatre encoches radiales périphériques 46. A l'emplacement de l'une de ces encoches, référencée 46B, la paroi latérale de l'évidement est creusée par un alésage semi-circulaire 47 dont le fond communique avec un évent 48 du piston.

D'une manière bien connue dans la technique, au fur et à mesure de l'usure des plaquettes de frein, qui sont accolées l'une au piston 44, l'autre à la branche 42 de l'étrier, l'écrou du piston se dévisse, et le piston, en se déplaçant en translation, fait de plus en plus saillie hors du corps de vérin 41. Lorsque les plaquettes sont entièrement usées, il faut, pour les remplacer, revisser le piston, qui entraîne alors l'écrou, à l'intérieur du corps 41, et le mécanisme interne du piston nécessite que ce vissage s'effectue sous un effort axial élevé. Pour cela, on procède comme suit.

La pince 3 étant fermée, la distance a précitée est suffisamment faible, par exemple de l'ordre de 15 mm, pour pouvoir introduire le flasque 4 et la rondelle 6 entre le piston et la branche 42 de l'étrier, l'ergot 27B passant dans l'encoche 46B. La portée 29 assure un pré-centrage de l'outil dans l'évidement 43 de l'étrier et, en ouvrant légèrement la pince, la portée 4B du flasque 4 se centre dans l'évidement 45 du piston, avec l'ergot 27B reçu dans l'alésage 47 et les trois ergots 27A engagés dans les trois encoches correspondantes, comme indiqué en trait mixte sur la Figure 8. Le flasque 4 est ainsi rendu solidaire en rotation du piston.

Ensuite, on exerce sur les poignées 10 un effort tendant à faire tourner la pince autour de l'axe du piston 44, selon la flèche F1 de la figure 7, tout en rapprochant ces poignées l'une de l'autre. La roue libre est bloquée dans ce sens, de sorte que le flasque 4, et donc le piston et son écrou, sont entraînés en rotation dans le sens F1, qui est le sens du vissage. Arrivé en bout de course, l'opérateur ramène les poignées 10 dans le sens F2 opposé à F1, tout en maintenant partiellement l'effort de rapprochement des poignées. La roue libre est alors débrayée, ce qui permet de revenir à la position angulaire initiale de la pince. En effectuant une succession de tels allers-retours avec la pince, on réalise le revissage complet du piston et de son écrou dans le corps de vérin 41.

On termine le vissage en amenant l'ergot 27B dans sa position angulaire initiale, ce qui est rendu facile par le fait que cet ergot dépasse sur la face interne du disque 4A. On assure ainsi l'indexage correct de l'évent 48 du piston.

Il est à noter que les premières courses de la pince ont éventuellement une amplitude limitée à celles de la rainure 32 de la rondelle 6, puis, lorsque les deux becs se sont suffisamment écartés l'un de l'autre, cette amplitude peut être beaucoup plus grande.

Grâce à la roue libre, l'ensemble du vissage s'effectue avec une seule mise en place de l'outil, facilitée par l'inclinaison des becs 22 et 23. De plus, la démultiplication produite par la structure de la pince 3 permet de développer sans effort musculaire important la force axiale et le couple de vissage nécessaires.

Lorsque le vissage est terminé, on retire très facilement l'outil, en relâchant simplement les poignées 10 pour laisser la pince se refermer.

Bien entendu, le flasque 4 et la rondelle 6 sont interchangeables pour s'adapter à différents types de freins à disque. En retirant la rondelle 6, on peut utiliser l'outil sur des freins dont la branche 42 est pleine, c'est-à-dire non échancrée, le bec 23 prenant alors directement appui sur cette branche par sa face extérieure.

Si nécessaire, la roue libre 5 peut être munie d'un dispositif d'inversion de tout type connu approprié (non représenté).

En variante, la pince peut être une simple pince du type "ciseaux". Le flasque 4 et/ou la rondelle 6 sont alors articulés à l'extrémité des becs 22 et 23 de manière à leur permettre de rester parallèles l'un à l'autre lors de l'utilisation de l'outil.

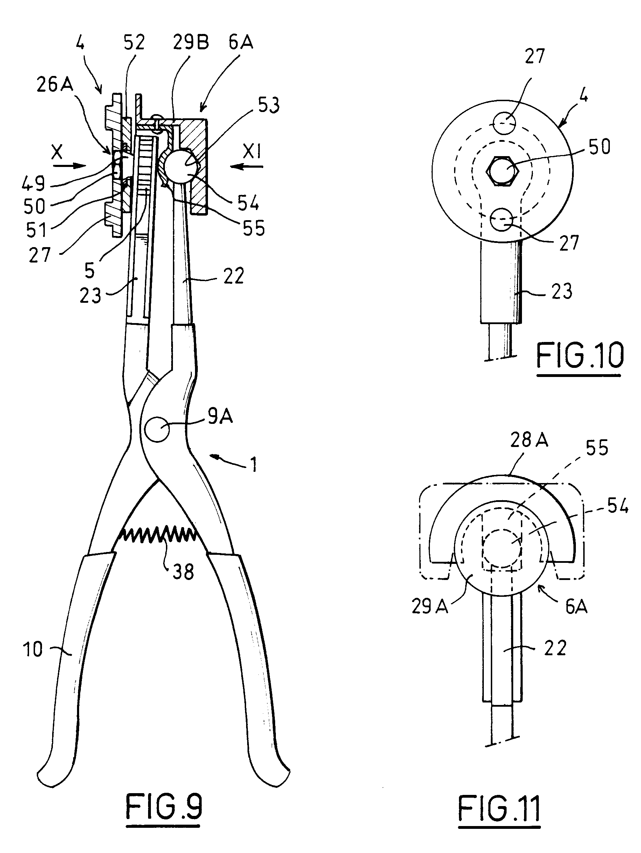

C'est ainsi que dans la variante des Figures 9 à 11, la pièce 1 est du type "ciseaux écarteurs", avec un unique axe d'articulation 9A de ses deux branches. La pièce mâle 26 de la Figure 5 est remplacée par une pièce mâle 26A comportant une base 49 à diamètre croissant et, à son extrémité libre, une tête 50 en six-pans sphérique coopérant avec le six-pans femelle du flasque 4, lequel ne comporte ici que deux ergots 27 de même hauteur, diamétralement opposés. La retenue axiale de ce flasque est assurée par un jonc fendu 51 qui entoure la base 49 et est reçu dans une gorge d'un anneau arrière 52 solidaire du flasque 4. Ce montage clipsé du flasque 4 lui permet un débattement omnidirectionnel par rapport au bec 23 de la pince, tout en assurant la transmission du couple de vissage.

De plus, la rondelle d'appui est similaire à la pièce 6A des Figures 5 et 6, mais avec le tourillon 35A remplacé par un évidement cylindro-conique 53. Une bille 54 prévue à l'extrémité du bec 22 est maintenue dans cet évidement par un ressort à lame 55 parallèle au bec 22 et riveté au point haut de la paroi 29B de la rondelle. Celle-ci est ainsi clipsée à rotule sur la bille 54.

On a représenté en trait mixte sur la Figure 11 un autre profil, à peu près rectangulaire à angles arrondis, que peut présenter la plaque d'appui 28 de la rondelle. Avec certaines configurations d'étriers de freins, un tel profil, en butant contre la face interne de l'étrier, limite ou supprime avantageusement la rotation de la rondelle par rapport à celui-ci lors de l'actionnement en va-et-vient de la pince.

## Revendications

1. Outil de vissage sous effort axial d'un organe (44) situé en regard d'une surface de réaction (42), du type comprenant une pince écarteuse (3) à deux becs (22, 23), caractérisé en ce que l'un (23) des deux becs porte sur sa face extérieure un flasque d'entraînement (4) muni de moyens (27) de positionnement sur ledit organe (44) et monté rotatif sur le bec (23) par l'intermédiaire d'une roue libre (5).

2. Outil suivant la revendication 1, caractérisé en ce que la pince (3) comporte un mécanisme articulé assurant des déplacements des deux becs (22, 23) parallèlement à eux-mêmes.

3. Outil suivant la revendication 1, caractérisé en ce que le flasque et/ou une surface d'appui prévue à l'extrémité du second bec (22) sont montés sur les becs correspondants par l'intermédiaire d'une articulation.

4. Outil suivant l'une quelconque des revendications 1 à 3, caractérisé en ce que le second bec (22) porte un patin élargi (6; 6A) d'appui sur la surface de réaction (42).

5. Outil suivant la revendication 4, caractérisé en ce que le patin (6; 6A) est monté rotatif sur le second bec (22).

6. Outil suivant la revendication 4 ou 5, caractérisé en ce que le patin (6) est monté sur la face intérieure du second bec (22).

7. Outil suivant la revendication 4 ou 5, caractérisé en ce que le patin (6A) coiffe le second bec (22) et s'applique sur la face extérieure de celui-ci.

8. Outil suivant l'une quelconque des revendications 4 à 7, caractérisé en ce que le patin (6; 6A) dépasse du second bec (22) vers le premier bec (23) et présente un évidement (30) de réception du premier bec (23) en position resserrée de la pince (3).

9. Outil suivant les revendications 5 et 8 prises ensemble, caractérisé en ce que le second bec (22) comporte des moyens (32, 34) de limitation du débattement angulaire du patin (6; 6A) qui assurent le maintien de l'évidement (30) en regard du premier bec (23).

10. Outil suivant l'une quelconque des revendications 4 à 9, destiné à revisser le piston (44) et l'écrou d'un frein à disque à rattrapage de jeu par dévissage d'un écrou intérieur à ce piston, caractérisé en ce que le patin (6; 6A) est une rondelle d'appui munie d'une portée (29; 29B) de centrage dans un évidement (43) de l'étrier (39) du frein coaxial au piston (44).

11. Outil suivant la revendication 10, caractérisé en ce que le patin (6A) présente un profil extérieur, notamment à peu près rectangulaire, adapté pour buter contre la surface intérieure de l'étrier (39) du frein lors de l'actionnement en va-et-vient de la pince (1);

12. Outil suivant l'une quelconque des revendications 1 à 11, caractérisé en ce que les becs (22, 23) sont inclinés dans le même sens par rapport au plan général de la pince (3).

13. Outil suivant l'une quelconque des revendications 1 à 12, caractérisé en ce que la roue libre (5) est munie d'un dispositif d'inversion.

## Claims

1. Tool for screwing under axial force a member (44) situated facing a reaction surface (42), of the type comprising a pair of expanding pliers (3) with two noses (22, 23), characterized in that one (23) of the two noses carries on its outer face a driving flange (4) equipped with means (27) for positioning on the said member (44) and mounted so that it can rotate on the nose (23) via a free wheel (5).

2. Tool according to Claim 1, characterized in that the pliers (3) include an articulated mechanism bringing about the movements of the two noses (22, 23) parallel to each other.

3. Tool according to Claim 1, characterized in that the flange and/or a bearing surface provided at the end of the second nose (22) are mounted on the corresponding noses via an articulation.

4. Tool according to any one of Claims 1 to 3, characterized in that the second nose (22) has an enlarged shoe (6; 6A) for bearing against the reaction surface (42).

5. Tool according to Claim 4, characterized in that the shoe (6; 6A) is mounted so that it can rotate on the second nose (22).

6. Tool according to Claim 4 or 5, characterized in that the shoe (6) is mounted on the internal face of the second nose (22).

7. Tool according to Claim 4 or 5, characterized in that the shoe (6A) covers the second nose (22) and bears on the external face thereof.

8. Tool according to any one of Claims 4 to 7, characterized in that the shoe (6; 6A) extends beyond the second nose (22) towards the first nose (23) and has a recess (30) for accommodating the first nose (23) when the pliers (3) are in the closed together position.

9. Tool according to Claims 5 and 8 taken together, characterized in that the second nose (22) has means (32, 34) for limiting the angular excursion of the shoe (6; 6A), which means keep the recess (30) facing the first nose (23).

10. Tool according to any one of Claims 4 to 9, intended for screwing back together the piston (44) and the nut of a disc brake with take up of play by unscrewing a nut inside this piston, characterized in that the shoe (6; 6A) is a bearing washer equipped with a bearing surface (29; 29B) for centering in a recess (43) of the caliper (39) of the brake coaxial with the piston (44).

11. Tool according to Claim 10, characterized in that the shoe (6A) has an external profile, especially a more or less rectangular one, designed to butt against the internal surface of the caliper (39) of the brake when the pliers (1) are actuated to and fro.

12. Tool according to any one of Claims 1 to 11, characterized in that the noses (22, 23) are inclined in the same direction with respect to the overall plane of the pliers (3).

13. Tool according to any one of Claims 1 to 12, characterized in that the free wheel (5) is equipped with a reversing device.

## Patentansprüche

1. Werkzeug des Typs mit einer Abstandszange (3) mit zwei Backen (22, 23) zum Verschrauben eines gegenüber einer Gegendruckfläche (44) befindlichen Elements (44) unter axialem Kraftaufwand, dadurch gekennzeichnet, daß eine der zwei Backen (23) an ihrer äußeren Fläche einen Antriebsflansch (4) trägt, der mit Mitteln (27) für die Positionierung auf dem Element (44) versehen ist und an der Backe (23) über ein freies Rad (5) drehbar angebracht ist.

2. Werkzeug nach Anspruch 1, dadurch gekennzeichnet, daß die Zange (3) einen angelenkten Mechanismus enthält, der parallele Verschiebungen der zwei Backen (22, 23) gewährleistet.

3. Werkzeug nach Anspruch 1, dadurch gekennzeichnet, daß der Flansch und/oder eine am Ende der zweiten Backe (22) vorgesehene Abstützfläche an den entsprechenden Backen über ein Gelenk angebracht sind.

4. Werkzeug nach irgendeinem der Ansprüche 1 bis 3, dadurch gekennzeichnet, daß die zweite Backe (22) eine verbreiterte Kufe (6; 6A) trägt' die der Anstützung auf der Gegendruckfläche (42) dient.

5. Werkzeug nach Anspruch 4, dadurch gekennzeichnet, daß die Kufe (6; 6A) an der zweiten Backe (22) drehbar angebracht ist.

6. Werkzeug nach Anspruch 4 oder 5, dadurch gekennzeichnet, daß die Kufe (6) an der Innenfläche der zweiten Backe (22) angebracht ist.

7. Werkzeug nach Anspruch 4 oder 5, dadurch gekennzeichnet, daß die Kufe (6A) die zweite Backe (229 abdeckt und auf die äußere Fläche derselben drückt.

8. Werkzeug nach irgendeinem der Ansprüche 4 bis 7, dadurch gekennzeichnet, daß die Kufe (6; 6A) von der zweiten Backe (22) zur ersten Backe (23) vorsteht und eine Aussparung (30) für die Aufnahme der ersten Backe (23) in der zusammengedrückten Position der Zange (3) aufweist.

9. Werkzeug nach Anspruch 5 in Verbindung mit Anspruch 8, dadurch gekennzeichnet, daß die zweite Backe (22) Mittel (32, 34) für die Begrenzung des Winkelausschlags der Kufe (6; 6A) enthält, die gewährleisten, daß die Aussparung (30) gegenüber der ersten Backe (23) gehalten wird.

10. Werkzeug nach irgendeinem der Ansprüche 4 bis 9, das dazu bestimmt ist, den Kolben (44) und die Mutter einer Scheibenbremse mit Spielbeseitigung durch Losschrauben einer in diesem Kolben befindlichen Mutter einzuschrauben, dadurch gekennzeichnet, daß die Kufe (6; 6A) eine Abstützscheibe ist, die in einer Aussparung (43) des Bremssattels (39) koaxial zum Kolben (44) mit einem Zentrierungsbereich (29; 29B) versehen ist.

11. Werkzeug nach Anspruch 10, dadurch gekennzeichnet, daß die Kufe (6A) ein Außenprofil aufweist, das insbesondere ungefähr rechtwinklig ist und geeignet ist, gegen die innere Fläche des Bremssattels (39) zu stoßen, wenn die Zange (1) hin und her bewegt wird.

12. Werkzeug nach irgendeinem der Ansprüche 1 bis 11, dadurch gekennzeichnet, daß die Backen (22, 23) in bezug auf die allgemeine Ebene der Zange (3) in die gleiche Richtung geneigt sind.

13. Werkzeug nach irgendeinem der Ansprüche 1 bis 12, dadurch gekennzeichnet, daß das freie Rad (5) mit einer Umkehrvorrichtung versehen ist.
